# EUROPEAN PATENT APPLICATION

(11) **EP 4 495 955 A2**
(43) Date of publication of application: **22.01.2025**
(21) Application number: 24216953.0
(22) Date of filing: 14.12.2011
(51) Int. Cl.: H01B 1/24

(54) **METHOD FOR FORMING UV-CURABLE CONDUCTIVE COMPOSITIONS AND A COMPOSITION THUS FORMED**

(30) Priority: 15.12.2010 NO 20101761
(62) Divisional of application: 11811183.0
(71) Applicant: Condalign AS, 0579 Oslo (NO)
(72) Inventor: The designation of the inventor has not yet been filed
(74) Representative: Dehns

(57) **Abstract**

Polymeric, optionally adhesive, composition and method for producing such composition with the ability to be subsequently cured by UV light to an anisotropic thermally conductive polymer layer, comprising the steps of i) providing a non-conductive matrix of a flowable polymer composition having inherent photocurability, ii) adding to said matrix conductive particles in an amount sufficiently low to allow the concentration of the conductive particles to be maintained at a level lower than the percolation threshold, and iii) placing the thus formed composition in a receptacle in which exposure to UV light is prevented. A method for establishing an anisotropic thermally conductive layer is also disclosed.

## Description

The present invention concerns a method for producing an polymer composition with the ability to be cured by UV light to an anisotropic electrically conductive polymer layer as well as adhesive composition so produced and a method for its subsequent use. This polymer can be, but need not be, adhesive in nature.

### Background

UV curing of polymers and polymer systems is generally beneficial because
1. it allows ultimate control of shelf life and pot life
2. it is fast
3. it can be applied where heat would cause damages

UV curing is widely used in the area of polymers and in particular adhesive polymers. Conductive polymer composites and adhesives are materials that comprise a polymer matrix and conductive fillers that make the material conductive. The particle fraction needs to be so high that the conductive particles form pathways through the material. Typically this means tens of volume percentages.

It is however difficult to prepare industrially useful UV curable conductive polymer composites since high fraction of conductive particles absorb incoming UV light, which makes the curing inefficient. Material with high particle fraction has stronger tendency to the segregation of particles and matrix than material with low particle fraction. Segregation limits the storage time of material. Segregated material may not be used or requires careful and inconvenient mixing procedures before the use.

US patent No. 5 932 339 describes an an anisotropically electricity-conductive film obtainable by dispersing in an adhesive agent electrically conductive particles, the adhesive agent being a curable adhesive agent comprising as a major component at least one polymer selected from the group consisting of an ethylene-vinyl acetate copolymer; a copolymer of ethylene, vinyl acetate and an acrylate and/or methacrylate monomer; a copolymer of ethylene, vinyl acetate and maleic acid and/or maleic anhydride; a copolymer of ethylene, an acrylate and/or methacrylate monomer and maleic acid and/or maleic anhydride; and an ionomer resin wherein molecules of an ethylene-methacrylic acid copolymer are linked with each other through a metal ion. It is mentioned that the film may be made UV curable.

US patent No. 5 769 996 concerns compositions and methods for providing anisotropic conductive pathways between two sets of conductors which comprises forming said pathways with a plurality of electrically conductive particles having substantially uniform sizes and shapes, said electrically conductive particles having been arrayed in a regular pattern by application of a substantially uniform magnetic field.

US patent No. 5 328 087 concerns a thermally and electrically conductive adhesive material comprising a hardened adhesive, and a non-solidified filler containing a liquid metal dispersed in separate spaced regions of the adhesive. The hardened adhesive provides a mechanical bond whereas the filler provides continuous thermal and electrical metal bridges, each bridge extending through the adhesive and contacting the bonded surfaces. The method includes dispersing a filler containing a liquid metal into an unhardened adhesive, contacting the unhardened adhesive and the filler in non-solidified state to the surfaces resulting in separate spaced regions of the non-solidified filler contacting both surfaces, and lastly hardening the adhesive. In an example this system is used with UV curable adhesive.

### Object

It is an object of the present invention to provide a polymer composition, such as an adhesive polymer composition, that is UV curable and that is able to produce electrically conductive layers.

It is a further object of the invention that the polymer composition is also able to produce thermally conductive layers.

It is also an object of the present invention to provide an adhesive polymer composition which is curable with UV light to provide an anisotropic electrically conductive layer and which, when stored in a manner in which exposure to UV light is prevented, exhibits excellent shelf life.

It is an object derived from said first object to provide a method for producing such an adhesive composition for storage and subsequent use.

It is a further object to provide the aforesaid method and adhesive composition with inexpensive means for industrial scale applications.

### The present invention

The above mentioned objects are achieved by the present invention which in accordance with a first aspect of the invention concerns a method for producing a polymer composition with the ability to be cured by UV light to an anisotropic electrically conductive layer as defined by claim 1. In accordance with a second aspect the invention concerns a method for producing a polymer composition with the ability to be cured by UV light to an anisotropic electrically conductive layer as defined by clause 1.

According to a third aspect of the invention the method concerns a polymer composition producable by means of the method according to the second aspect of the invention, as defined by clause 10.

Finally, according to a fourth aspect the invention concerns methods for establishing an anisotropic electrically conductive layer as defined by clauses 12 and 13.

Preferred embodiments of the invention are disclosed by the dependent claims.

While it is essential to store polymer compositions which are not immediately used in a container or receptacle in which exposure to UV light is prevented, it is preferred that it is stored in a manner in which exposure to any light is prevented and in a manner in which contact with oxygen is also suppressed.

The subsequent step of making the layer, which may be in the form of a glue joint, a film, coating or free standing mat or film product, may take place weeks or months later than the production of the composition. If it is desired to obtain a product in which the conductive strings of particles (pathways) are mainly mutually parallel, an AC electric field should be applied to align the particles. It is however worth noticing that for achieving the benefits of the polymer composition according to the present invention optimally, a number of parameters should be taken into consideration and controlled as described below.

The conductive particles are typically infusible conductive particles such as carbon particles, metal or metal coated particles, or metal oxide particles. The conductive particles show low molecular or particle anisotropy and thus the major part of the conductive particles have low aspect ratios; i.e. aspect ratio ranges of 1-5, 1-10 or 1-20 are typical. The terms "low molecular or particle anisotropy" and "low aspect ratio" have the same meaning herein. This is the case with spherical carbon black or disk-like or conical carbon particles or graphitic particles. The conductive particles can be a mixture of different carbon particles. Also other conductive particles can be used, like metal, such as silver or metal oxide particles or colloidal metal particles. The particles are typically added to the polymer in the form of a preferentially non-aqueous dispersion since significant amounts of water tend to have a negative influence.

Non-aqueous dispersion is preferable since the aqueous dispersion can experience hydrolysis under electric field (H20->H+ + OH-) if the field is too high. The hydrolysis may be avoided by lowering the field. Also, hydrolysis is avoided if the water content is relatively small. This level would typically correspond at least to the impurity levels in typical organic solvents or polymer materials. It can even correspond to the water levels in azeotropic mixtures of alcohols and water. For example ethanol contains more than 11 mol-% water."

The flowable polymer composition may have inherent adhesive properties and can be based on a broad range of polymers comprising one or several polymer components and additives commonly used therewith. In particular, it can be a thermoset polymer system which is solidified by crosslinking reactions. The polymer can also be a thermoplastic polymer system or a lyotropic polymer system. It can also be any compatible combination of such polymers.

UV curing polymers generally have desirable properties in the forrm of rapid curing time and strong bond strength. They can cure in as short time as a second or a few seconds and many formulations can bond dissimilar materials and withstand harsh temperatures. These qualities make UV curing polymers important in the manufacturing of items in many industrial markets such as electronics, telecommunications, medical, aerospace, glass, and optical. Unlike traditional adhesives, UV light curing polymers and polymer adhesives not only bond materials together but they can also be used to seal and coat products.

When exposed to the correct energy and irradiance in the required band of UV light, polymerization occurs, and so the polymer compositions harden or cure. The types of UV sources for UV curing include UV lamps, UV LEDs and Excimer Flash lamps.

Laminates can be built up with successively applied UV cured layers. This obviates the need for adhesive or primer layers. Thin layers can be formed in very short time, in the range of one second. There are a wide variety of UV curable vinyl monomers, particularly acrylics, with a wide variety of properties that can be combined by means of copolymers or laminates. For example strong acrylics can be combined with the fracture resistant acrylates. Acrylics could be combined with intermediate layers of cross-linked elastomers for maximizing tear strength while retaining surface hardness. Certain fluoracrylates are hard, and antireflective. They have higher specular transmission than a commonly used fluoropolymer, because fluoroacrylates can be completely amorphous and have no scattering centers. Epoxy resins have tightly linked adhesive polymer structures and can be used in surface adhesives and coatings. Such epoxy resins forms cross-linked polymer structures that have strong adhesion and low shrinkage.

There are many systems available for UV curing an adhesive, coating or film. Trie Dymax Heavy-Duty UV curing Widecure^{™} Conveyor Systems is an example of a system mounted on a conveyor belt. Dymax BlueWave LED Prime UVA used LED light and thus use less effect and have constant high intensity.

A highly desirable characteristic when using the object of present invention is that conductive paths can be formed of predominantly low aspect ratio particles like carbon black,carbon nanocones and/ or graphene and the formation can take place at low electric field strengths. This simplifies the production equipment and enables both larger surfaces and thicker films to be produced. The carbon black and carbon nanocones and graphitic particles are considerably less expensive than the carbon nanotubes and can be produced in sufficient quantities by industrial methods. Moreover, it is more difficult to form uniform dispersions with carbon nanotubes.

Another highly desirable characteristic of the present invention is that a comparably low concentration of conductive particles may be used. For conductive mixtures a percolation threshold is defined as the lowest concentration of conductive particles necessary to achieve long-range conductivity in the random system. With the polymer composition according to the present invention the concentration of conductive particles required for achieving conductivity in a predefined direction is not determined by the percolation threshold and can be much lower. For practical reasons the concentration of particles is determined by the requirements on the conductive paths desired to build when using the polymer composition, there usually being no reason to have excess amounts of conductive particles not arranged into the conductive paths. The concentration of conductive particles in the polymer composition can be up to 10 times lower than the percolation threshold or even lower. Concentrations of conductive particles is typically in the range of 0.2-10 % by volume or 0.2 - 2 or 0.2-1.5 % by volume. It could even be less than 0.2 % in some embodiments, e.g. 0.1 % by volume.

Such a low particle concentration has several advantages. The tendency of particle segregation in the dispersion is reduced and the shelf life thereby correspondingly increased, the cost of the components is reduced, the mechanical strength of the subsequently formed anisotropic conductive film is increased and the optical transparency is increased thereby enhancing the sensivity to UV light, allowing a more rapid and less power consuming curing process. The increased transparency may also be seen to improve the aestetic properties of the cured products and gives mechanical and optical properties closer to that of polymers without conductive particles.

The subsequent use of the object of the present invention includes but is not limited to: electrostatic discharge (ESD) devices, conductive glue and adhesives for use in solar panels and electronics or to suppress electromagnetic interference (EMI). Also possible is to apply material on cellulose based paper that would not allow thermal curing.

The aspect ratio as discussed herein is defined as the ratio beween the largest linear dimension of a particle and the largest dimension perpendicular to said largest dimension.

"Low aspect ratio" as used herein refers to an aspect ratio less than 20, more preferably less than 10 and even more preferably less than 5.

The conductive particles are typically chosen among the groups comprising metal particles, metal coated particles, metal oxide particles and carbon particles as well as any combination of particles from two or more of said groups.

The composition according to the present invention may be used as glue, i.e. to glue two objects together as well as establish an anisotropic electrically conductive layer on top of a single surface (substrate).

Alternatively, the composition according to the present invention may be used to establish an anisotropic thermally conductive layer. An adequate use for such thermal conductive layers may be to dissipate heat from certain electronic components, e.g. within a computer.

The method and composition can also be used to produce a free-standing polymer film.

In a preferred embodiment the aspect ratio for a majority (more than 50 %) of the conductive particles is in the range below 5, the aspect ratio for at least 75 % of the conductive particles is below 10, and the aspect ratio for at least 90 % of the conductive particles is below 20.

Further aspects and embodiments of the invention can be appreciated from the following numbered clauses.

Clause 1. Method for producing a polymer composition with the ability to be cured by UV light to an anisotropic electrically conductive polymer layer, characterized in comprising the steps:
- providing a non-conductive matrix of a flowable polymer composition having inherent photocurability,
- adding to said matrix conductive particles having a low aspect ratio in an amount sufficiently low to allow the concentration of the conductive particles to be maintained at a level lower than the percolation threshold of isotropic mixture,
- placing the thus formed composition in a receptacle in which exposure to UV light is prevented.

Clause 2. Method as claimed in clause 1, characterized in that the aspect ratio for a majority of the conductive particles is in the range below 5, that the aspect ratio for at least 75 % of the particles is in the range below 10, and that the aspect ratio for at least 90 % of the conductive particles is in the range below 20.

Clause 3. Method as claimed in clause 1, characterized in that the polymer matrix is adhesive in nature.

Clause 4. Method as claimed in clause 1, characterized in that the conductive particles being present in the non-conductive matrix in a concentration in the range 0.1-10 % by volume.

Clause 5. Method as claimed in clause 1, characterized in that the conductive particles being present in the non-conductive matrix in a concentration in the range 0.1-2 % by volume.

Clause 6. Method as claimed in clause 1, characterized in that the conductive particles being present in the non-conductive matrix in a concentration in the range 0.1-1.5 % by volume.

Clause 7. Method as claimed in clause 1, characterized in that the conductive particles are added as a predominantly non-aqueous dispersion.

Clause 8. Method as claimed in clause 1, characterized in that the conductive particles are added as a non- aqueous dispersion.

Clause 9. Method as claimed in clause 1, characterized in that the conductive particles are chosen from carbon particles, metallic particles, metal coated particles, and metal oxide particles or any combination thereof.

Clause 10. Method as claimed in clause 9, characterized in that the carbon particles comprises particles of carbon black or carbon nanocones or graphitic particles or graphene or any combination thereof.

Clause 11. Polymer composition for establishing anisotropic, electric conductive pathways characterized by being manufacturable according to clause 1.

Clause 12. Polymer composition as claimed in clause 11, characterized in that the polymer composition is adhesive in nature.

Clause 13. Method for establishing an anisotropic electrically conductive and optionally thermally conductive layer, characterized by comprising:
- applying a layer of polymer composition according to clause 10 to a substrate,
- optionally placing a second substrate on top of said layer,
- applying an electric field across the adhesive composition (in a direction determined by the direction of intended electric conductivity, to thereby align the conductive particles into assemblies to form anisotropic electric pathways, and
- allowing the composition to cure under influence by UV light to provide a free-standing film and to preserve the electric conductive pathways.

Clause 14. Method for establishing an anisotropic electrically conductive and optionally thermally conductive layer, characterized by comprising:
- applying a layer of adhesive polymer composition according to clause 11 to a substrate,
- optionally placing a second substrate on top of said layer,
- applying an electric field across the adhesive composition (in a direction determined by the direction of intended electric conductivity, to thereby align the conductive particles into assemblies to form anisotropic electric pathways, and
- allowing the adhesive composition to cure under influence by UV light to provide permanent adhesion between adhesive layer and substrate and to preserve the electric conductive pathways.

Clause 15. Method according to clause 13 or 14, characterized in that an AC field is applied to obtain mainly mutually parallel electric conductive pathways.

The invention is not limited by the examples and embodiments set out above but rather is defined by the attached claims.

## Claims

1. A method for establishing an anisotropic thermally conductive layer, comprising:
producing a polymer composition, wherein producing the polymer composition comprises:
providing a non-conductive matrix of a flowable polymer composition having inherent photocurability;
adding to said matrix thermally conductive particles in an amount sufficiently low to allow the concentration of the thermally conductive particles to be maintained at a level lower than the percolation threshold of isotropic mixture; and
placing the thus formed composition in a receptacle in which exposure to UV light is prevented,
the method for establishing an anisotropic thermally layer further comprising:
applying a layer of the polymer composition to a substrate;
applying an electric field across the adhesive composition in a direction determined by the direction of intended thermal conductivity, to thereby align the conductive particles into assemblies to form anisotropic thermal pathways; and
allowing the adhesive composition to cure under influence by UV light to preserve the thermal conductive pathways.

2. The method as claimed in claim 1, wherein the polymer composition is adhesive in nature.

3. The method as claimed in claim 2, wherein allowing the adhesive comprising to cure under influence by UV light further provides permanent adhesion between adhesive layer and the substrate.

4. The method as claimed in any preceding claims, wherein the thermally conductive particles are present in the non-conductive matrix in a concentration in the range 0.1-10 % by volume.

5. The method as claimed in any preceding claim, wherein the conductive particles are present in the non-conductive matrix in a concentration in the range 0.1-2 % by volume.

6. The method as claimed in any preceding claim, wherein the conductive particles are present in the non-conductive matrix in a concentration in the range 0.1-1.5 % by volume.

7. The method as claimed in any preceding claim, wherein the thermally conductive particles are added as a predominantly non-aqueous dispersion.

8. The method as claimed in any preceding claim, wherein the thermally conductive particles are added as a non-aqueous dispersion.

9. The method as claimed in any preceding claim, wherein an AC field is applied to obtain mainly mutually parallel thermally conductive pathways.

10. The method as claimed in any preceding claim, wherein the method further comprises placing a second substrate on top of the layer of the polymer composition.
